# EUROPÄISCHE PATENTANMELDUNG

(11) **EP 3 333 048 A1**
(43) Veröffentlichungstag der Anmeldung: **13.06.2018**
(21) Anmeldenummer: 17202826.8
(22) Anmeldetag: 21.11.2017
(51) Int. Cl.: B62D 15/02, G01C 21/20, G08G 1/005

(54) **VERFAHREN ZUM AUTONOMEN MANÖVRIEREN EINES KRAFTFAHRZEUGS AUF EINER PARKFLÄCHE UNTER VERWENDUNG VON MARKIERUNGSELEMENTEN, FAHRERASSISTENZSYSTEM, KRAFTFAHRZEUG, INFRASTRUKTUREINRICHTUNG SOWIE KOMMUNIKATIONSSYSTEM**

(30) Priorität: 12.12.2016 DE 102016124062
(71) Anmelder: Valeo Schalter und Sensoren GmbH, 74321 Bietigheim-Bissingen (DE)
(72) Erfinder: Heimberger, Markus, 74321 Bietigheim-Bissingen (DE)

(57) **Zusammenfassung**

Die Erfindung betrifft ein Verfahren zum autonomen Manövrieren eines Kraftfahrzeugs (1) auf einer Parkfläche (10), welche eine Mehrzahl von Stellplätzen (11) umfasst, bei welchem das Kraftfahrzeug (1) von einem Einfahrtsbereich (18) der Parkfläche (10) entlang von Fahrgassen (12), welche zu den Stellplätzen (11) führen, zum Auffinden eines freien Stellplatzes (17) der Stellplätze (11) manövriert wird, wobei während des Manövrierens Markierungselemente (13) der Parkfläche (10) mit zumindest einem Sensors (4) eines Fahrerassistenzsystems (2) des Kraftfahrzeugs (1) erfasst werden und das Kraftfahrzeug (1) anhand der erfassten Markierungselemente (13) manövriert wird, wobei mittels des Fahrerassistenzsystems (2) anhand der erfassen Markierungselemente (13) ein Fahrweg (24, 24') zum Manövrieren des Kraftfahrzeugs (1) entlang der Fahrgassen (12) bestimmt wird und das Kraftfahrzeug (1) entlang des bestimmten Fahrwegs (24, 24') autonom manövriert wird.

## Beschreibung

Die vorliegende Erfindung betrifft ein Verfahren zum autonomen Manövrieren eines Kraftfahrzeugs auf einer Parkfläche, welche eine Mehrzahl von Stellplätzen, zu den jeweiligen Stellplätzen führende Fahrgassen und eine Mehrzahl von Markierungselementen aufweist. Darüber hinaus betrifft die vorliegende Erfindung ein Fahrerassistenzsystem für ein Kraftfahrzeug sowie ein Kraftfahrzeug. Des Weiteren betrifft die vorliegende Erfindung eine Infrastruktureinrichtung für eine Parkfläche. Schließlich betrifft die vorliegende Erfindung ein Kommunikationssystem mit einem Fahrerassistenzsystem und einer solchen Infrastruktureinrichtung.

Das Interesse richtet sich vorliegend auf Verfahren zum autonomen Manövrieren eines Kraftfahrzeugs auf einer Parkfläche. Eine solche Parkfläche kann beispielsweise ein öffentlicher Parkplatz sein, welcher mehrere Stellplätze zum Abstellen des Kraftfahrzeugs aufweist. Darüber hinaus weisen derartige Parkflächen üblicherweise eine Mehrzahl von Fahrgassen auf, welche zu den Stellplätzen führen. Aus dem Stand der Technik sind bereits Verfahren bekannt, die es ermöglichen, das Kraftfahrzeug autonom auf der Parkfläche zu manövrieren und in einen freien Stellplatz einzuparken. Dabei kann der Fahrer beispielsweise das Kraftfahrzeug an einem Einfahrtsbereich der Parkfläche abstellen und das Kraftfahrzeug wird anschließend vollautonom innerhalb der Parkfläche zu dem freien Stellplatz manövriert. In gleicher Weise kann das Kraftfahrzeug von dem Stellplatz aus der Parkfläche heraus manövriert werden, und der Fahrer wieder in das Kraftfahrzeug einsteigen. Ein derartiges Verfahren zum autonomen Manövrieren des Kraftfahrzeugs wird auch als Valet-Parken bezeichnet.

Aus dem Stand der Technik sind Verfahren bekannt, bei denen mit einer Infrastruktureinrichtung der Parkfläche freie Stellplätze auf der Parkfläche erkannt werden und Trajektorien, welche beispielsweise von dem Einfahrtsbereich der Parkfläche zu dem freien Stellplatz führen, bestimmt werden. Informationen zu dieser Trajektorie können dann von der Infrastruktureinrichtung der Parkfläche zu dem Fahrerassistenzsystem des Kraftfahrzeugs übertragen werden. Mit Hilfe des Fahrerassistenzsystems kann dann das Kraftfahrzeug auf Grundlage von Odometrie entlang dieser Trajektorie zu dem freien Stellplatz manövriert werden. Wenn das Kraftfahrzeug mit Hilfe von Odometrie entlang der Trajektorie manövriert wird, können auf Grundlage von Odometrie-Fehlern Abweichungen zwischen der tatsächlich zurückgelegten Bewegungsfahrt des Kraftfahrzeugs und der Trajektorie, die von der Infrastruktureinrichtung der Parkfläche bestimmt wurde, entstehen. Wenn das Kraftfahrzeug auf der Parkfläche manövriert wird, werden üblicherweise verhältnismäßig lange Wegstrecken zurückgelegt. Bei diesen verhältnismäßig langen Wegstrecken wirken sich Odometrie-Fehler deutlicher aus. Somit kann gegebenenfalls ein zuverlässiges Manövrieren des Kraftfahrzeugs auf der Parkfläche nicht gewährleistet werden.

Hierzu beschreibt die DE 10 2009 046 912 A1 ein Verfahren für die Führung eines Fahrzeugs von einer Start- zu einer Zielposition. An einer Startposition werden dem Fahrzeug Informationen über die Lage der Zielposition und über eine die Startposition mit der Zielposition verbindende Trajektorie übermittelt. Des Weiteren ist es vorgesehen, dass das Fahrzeug auf der Fahrbahn angeordnete Markierungen und Landmarken erfasst und mit deren Hilfe zu der Zielposition geführt wird. Um die vorgeschlagene Trajektorie einhalten zu können, sind auf der Fahrbahn Markierungen angeordnet, die das Fahrzeug mit einem geeigneten Umfeldsensor erfasst. Die Odometriedaten des Fahrzeugs können vorteilhaft mit Landmarken auf der Fahrbahn abgeglichen werden.

Es ist Aufgabe der vorliegenden Erfindung, eine Lösung aufzuzeigen, wie das autonome Manövrieren eines Kraftfahrzeugs auf einer Parkfläche zuverlässiger durchgeführt werden kann.

Diese Aufgabe wird erfindungsgemäß durch ein Verfahren, durch ein Fahrerassistenzsystem, durch ein Kraftfahrzeug, durch eine Infrastruktureinrichtung sowie durch ein Kommunikationssystem mit den Merkmalen gemäß den unabhängigen Ansprüchen gelöst. Vorteilhafte Weiterbildungen der Erfindung sind Gegenstand der abhängigen Ansprüche.

Gemäß einer Ausführungsform eines Verfahrens zum autonomen Manövrieren eines Kraftfahrzeugs auf einer Parkfläche, welche eine Mehrzahl von Stellplätzen umfasst, wird bevorzugt das Kraftfahrzeug von einem Einfahrtsbereich der Parkfläche entlang von Fahrgassen, welche bevorzugt zu den Stellplätzen führen, zum Auffinden eines freien Stellplatzes der Stellplätze manövriert. Während des Manövrierens werden insbesondere Markierungselemente der Parkfläche mit zumindest einem Sensor eines Fahrerassistenzsystems des Kraftfahrzeugs erfasst. Des Weiteren wird das Kraftfahrzeug bevorzugt anhand der erfassten Markierungselemente manövriert. Außerdem ist es bevorzugt vorgesehen, dass mittels des Fahrerassistenzsystems anhand der erfassten Markierungselemente ein Fahrweg zum Manövrieren des Kraftfahrzeugs entlang der Fahrgassen bestimmt wird. Darüber hinaus wird das Kraftfahrzeug insbesondere entlang des bestimmten Fahrwegs autonom manövriert.

Ein erfindungsgemäßes Verfahren dient zum autonomen Manövrieren eines Kraftfahrzeugs auf einer Parkfläche, welche eine Mehrzahl von Stellplätzen umfasst. Hierbei wird das Kraftfahrzeug von einem Einfahrtsbereich der Parkfläche entlang von Fahrgassen, welche zu den Stellplätzen führen, zum Auffinden eines freien Stellplatzes der Stellplätze manövriert, wobei während des Manövrierens Markierungselemente der Parkfläche mit zumindest einem Sensor eines Fahrerassistenzsystems des Kraftfahrzeugs erfasst werden und das Kraftfahrzeug anhand der erfassten Markierungselemente manövriert wird. Mittels des Fahrerassistenzsystems wird anhand der erfassten Markierungselemente ein Fahrweg zum Manövrieren des Kraftfahrzeugs entlang der Fahrgassen bestimmt und das Kraftfahrzeug wird entlang des bestimmten Fahrwegs autonom manövriert.

Mit Hilfe des Verfahrens soll das Kraftfahrzeug vollautonom auf einer Parkfläche manövriert werden. Die Parkfläche weist eine Mehrzahl von Stellplätzen auf, auf denen Kraftfahrzeuge abgestellt beziehungsweise geparkt werden können. Die Parkfläche kann beispielsweise ein öffentlicher Parkplatz, ein privater Parkplatz, eine Tiefgarage oder ein Teil eines Parkhauses sein. Die Parkfläche weist mehrere Fahrgassen auf, entlang welcher das Kraftfahrzeug bewegt werden kann. Dabei führen die jeweiligen Fahrgassen zu den Stellplätzen der Parkfläche. Dabei ist es insbesondere vorgesehen, dass das Kraftfahrzeug von dem Fahrer des Kraftfahrzeugs an einem Einfahrtsbereich der Parkfläche abgestellt wird. Ausgehend von dem Einfahrtsbereich wird dann das Kraftfahrzeug mit Hilfe des Fahrerassistenzsystems des Kraftfahrzeugs autonom auf der Parkfläche beziehungsweise innerhalb der Parkfläche manövriert. Zu diesem Zweck kann das Fahrerassistenzsystem die Längsführung und die Querführung des Kraftfahrzeugs übernehmen. Dies bedeutet, dass das Kraftfahrzeug in die Lenkung, einen Antriebsmotor und/oder ein Bremssystem des Kraftfahrzeugs eingreifen kann. Darüber hinaus umfasst das Fahrerassistenzsystem zumindest einen Sensor, mit dem beispielsweise Objekte in der Umgebung des Kraftfahrzeugs erfasst werden können. Bei dem Sensor kann es sich beispielsweise um eine Kamera handeln, mittels welcher Bilder- oder Videodaten bereitgestellt werden können. Mit Hilfe eines entsprechenden Objekterkennungsalgorithmus können dann Objekte in den Bildern erkannt werden. Alternativ oder zusätzlich kann das Fahrerassistenzsystem weitere Sensoren aufweisen. Diese Sensoren können beispielsweise verteilt an dem Kraftfahrzeug angeordnet sein.

Bei den Sensoren kann es sich um Ultraschallsensoren, Radarsensoren, Lidar-Sensoren oder Laserscanner handeln.

Mit dem zumindest einen Sensor können auch Markierungselemente der Parkfläche erfasst werden. Diese Markierungselemente können beispielsweise Fahrbahnmarkierungen sein, welche auf den Fahrgassen aufgebracht sind. Beispielsweise können solche Markierungselemente Pfeile sein, welche auf die Fahrgassen aufgebracht sind, und welche eine vorgegebene Fahrtrichtung auf der Fahrgasse beschreiben. Die Markierungselemente können auch Fahrbahnmarkierungen sein, welche eine Grenze der Fahrgasse darstellen. Die Markierungselemente können auch Mittellinien auf den Fahrgassen sein. Es kann auch vorgesehen sein, dass es sich bei den Markierungselementen um Parkflächenmarkierungen handelt, welche die jeweiligen Stellplätze begrenzen. Grundsätzlich kann es auch vorgesehen sein, dass mit den Sensoren Markierungselemente erfasst werden, die beispielsweise an den Wänden und/oder an den Decken der Parkfläche angeordnet sind. In diesem Fall können die Markierungselemente durch Schilder, Pfeile, Beleuchtungselemente oder dergleichen gebildet sein.

Gemäß einem wesentlichen Aspekt der vorliegenden Erfindung ist es nun vorgesehen, dass das Fahrerassistenzsystem diese erkannten Markierungselemente nutzt und auf Grundlage dieser Markierungselemente einen Fahrweg zum Manövrieren des Kraftfahrzeugs auf den Fahrgassen ermittelt. Dabei ist es insbesondere vorgesehen, dass zum Manövrieren des Kraftfahrzeugs keine Trajektorie herangezogen wird, welche zuvor bestimmt wurde. Beispielsweise kann eine solche Trajektorie von der Infrastruktureinrichtung der Parkfläche bestimmt werden. Vorliegend ist es insbesondere vorgesehen, dass das Manövrieren des Kraftfahrzeugs ausschließlich anhand der erkannten Markierungselemente durchgeführt wird. Dies bietet im Vergleich zu Verfahren, bei denen das Kraftfahrzeug entlang einer vorgegebenen Trajektorie auf Grundlage von Odometrie manövriert wird, keine Odometrie-Fehler auftreten können. Somit kann das Kraftfahrzeug auf einfache und zuverlässige Weise autonom auf der Parkfläche manövriert werden.

Bevorzugt werden als die Markierungselemente Fahrbahnmarkierungen in Form von Pfeilen erfasst, welche auf den Fahrgassen aufgebracht sind. Diese Pfeile können beispielsweise mittig auf den Fahrgassen aufgebracht sein und in vorbestimmten Abständen zueinander angeordnet sein. Diese Pfeile geben die vorgeschriebene Fahrtrichtung auf den jeweiligen Fahrgassen an. Derartige Pfeile können beispielsweise mit dem Sensor, der als Kamera ausgebildet ist, und dem ein entsprechender Objekterkennungsalgorithmus beziehungsweise Bildverarbeitungsalgorithmus nachgeschaltet ist, erkannt werden. Diese Pfeile sind räumlich begrenzt und weisen eine typische Formgebung auf. Des Weiteren unterscheidet sich die Farbe der Pfeile üblicherweise von der Farbe der Fahrbahnoberfläche der Fahrgassen. Somit können diese Pfeile auf einfache und zuverlässige Weise erkannt werden. Ferner kann es bevorzugt vorgesehen sein, dass zusätzlich zu den Pfeilen auch weitere Markierungselemente der Parkfläche erkannt werden und auf Grundlage dieser Markierungselemente der Fahrweg für das Kraftfahrzeug bestimmt wird. Insbesondere auf Grundlage der Markierungselemente, die als Pfeile auf den Fahrgassen ausgebildet sind, kann ein zuverlässiges Manövrieren des Kraftfahrzeugs ermöglicht werden.

Gemäß einer weiteren Ausführungsform werden die Markierungselemente mittels des Fahrerassistenzsystems anhand eines Vergleichs der jeweiligen Markierungselemente mit Referenzmarkierungselementen erkannt. In einem Speicher des Fahrerassistenzsystems beziehungsweise eines Steuergeräts des Fahrerassistenzsystems kann eine Mehrzahl von Referenzmarkierungselementen hinterlegt sein. Wenn mit Hilfe der Sensoren des Fahrerassistenzsystems die Markierungselemente erkannt werden, können diese mit den gespeicherten Referenzmarkierungselementen verglichen werden. Die gespeicherten Referenzmarkierungselemente können zusätzliche Informationen enthalten, welche beispielsweise die Anordnung dieser Referenzmarkierungselemente innerhalb der Parkfläche beschreiben. Beispielsweise können die jeweiligen Referenzmarkierungselemente Informationen enthalten, ob diese auf den Fahrgassen aufgebracht sind und wo sie auf der Fahrgasse aufgebracht sind. Dabei kann beispielsweise berücksichtigt werden, dass Markierungselemente, die als Pfeil ausgebildet sind, üblicherweise mittig auf einer Fahrgasse angeordnet sind. Markierungselemente, welche beispielsweise als durchgezogene Linie ausgebildet sind, sind üblicherweise an den Seitenbereichen der Fahrgasse angeordnet. Somit können durch einen einfachen Vergleich der erfassten Markierungselemente mit den Referenzmarkierungselementen nähere Informationen zu den erfassten Markierungselementen gewonnen werden. Diese können dann bei der Bestimmung des Fahrwegs berücksichtig werden.

Weiterhin ist es vorteilhaft, wenn mittels des Fahrerassistenzsystems fortlaufend eine relative Lage zwischen dem Kraftfahrzeug und den jeweiligen erkannten Markierungselementen bestimmt wird und zu jedem der erkannten Markierungselemente ein mit dem Kraftfahrzeug befahrbarer Bereich und/oder eine erlaubte Fahrtrichtung auf der Fahrgasse, welche dem erkannten Markierungselement zugeordnet ist, bestimmt wird. Wie bereits erläutert, können auf Grundlage des Vergleichs der mit den Sensoren erfassten Markierungselemente und den Referenzmarkierungselementen weitere Informationen zu den Markierungselementen gewonnen werden. Anhand von jedem erkannten Markierungselement kann dann ein befahrbarer Bereich auf der Fahrgasse bestimmt werden, welcher diesem erkannten Markierungselement zugeordnet ist. Wenn als Markierungselement beispielsweise ein Pfeil erkannt wird, kann beispielsweise der befahrbare Bereich links und rechts neben dem Pfeil definiert werden. Hierbei wird berücksichtigt, dass der Pfeil üblicherweise in der Mitte von der Fahrgasse angeordnet ist und das Kraftfahrzeug in einem bestimmten Bereich links und rechts neben dem Pfeil manövriert werden kann. Wenn als das Markierungselement eine durchgezogene Linie erkannt wird, wird beispielsweise davon ausgegangen, dass diese den Rand der Fahrgasse repräsentiert. Ausgehend von dieser durchgezogenen Linie kann beispielsweise ein vorbestimmter Bereich neben dieser Linie definiert werden, welcher als befahrbarer Bereich angesehen wird. Dabei kann es zudem vorgesehen sein, dass mit dem zumindest einen Sensor weitere Objekte erfasst werden und diese zur Bestimmung des befahrbaren Bereichs herangezogen werden. Beispielsweise können mit dem zumindest einen Sensor geparkte Fahrzeuge und/oder Wände erkannt werden. Alternativ oder zusätzlich kann es vorgesehen sein, dass anhand der erkannten Markierungselemente eine erlaubte Fahrtrichtung auf der Fahrgasse, auf welcher sich das Kraftfahrzeug aktuell befindet, bestimmt wird. Dies gilt insbesondere für den Fall, wenn als Markierungselement ein Pfeil erkannt wird. Somit kann das Kraftfahrzeug innerhalb der Parkfläche manövriert werden, ohne dass dieses zusätzliche Daten von einer Infrastruktureinrichtung der Parkfläche empfängt.

Gemäß einer weiteren Ausgestaltung wird ein Verkehrsschild und/oder ein Hinweisschild der Parkfläche mit dem zumindest einen Sensor erkannt, wobei das Verkehrsschild und/oder das Hinweisschild eine räumliche Ausgestaltung der Parkfläche beschreibt, und der Fahrweg zusätzlich anhand des Verkehrsschilds und/oder des Hinweisschilds bestimmt wird. Zusätzlich zu den Markierungselementen können mit dem Fahrerassistenzsystem beziehungsweise mit den Sensoren Verkehrsschilder und/oder Hinweisschilder erkannt werden. Derartige Verkehrsschilder können beispielsweise Verkehrsschilder sein, welche auf eine Einbahnstraße hinweisen. Somit kann der Fahrweg derart bestimmt werden, dass dieser beispielsweise dieser Einbahnstraße folgt. Es können auch Hinweisschilder erfasst werden, welche beispielsweise eine Richtung zu einer Ausfahrt der Parkfläche oder einer Einfahrt der Parkfläche beschreiben. Auf Grundlage dieser Hinweisschilder können dann Informationen über die räumliche Ausgestaltung der Parkfläche bestimmt werden. Somit kann die Suche nach dem freien Stellplatz zuverlässiger durchgeführt werden.

Weiterhin ist es vorteilhaft, wenn bei einer Abzweigung der Fahrgassen der Fahrweg des Kraftfahrzeugs anhand des Verkehrsschilds und/oder des Hinweisschilds bestimmt wird, wobei das Verkehrsschild und/oder Hinweisschild eine Ausfahrt von der Parkfläche und/oder eine vorgegebene Fahrtrichtung auf den Fahrgassen beschreibt. Als Markierungselemente können auch Pfeile erfasst werden, welche auf eine Abzweigung der Fahrgassen hinweisen. Beispielsweise kann ein solcher Pfeil beziehungsweise Richtungspfeil angeben, dass die Fahrt geradeaus und rechts beziehungsweise links möglich ist. In diesem Fall muss das Fahrerassistenzsystem entscheiden, entlang welcher Richtung beziehungsweise entlang welcher Fahrgasse es die Fahrt des Kraftfahrzeugs fortführt. In diesem Fall können die Verkehrsschilder und/oder Hinweisschilder herangezogen werden. Wenn beispielsweise auf Grundlage der Hinweisschilder erkannt wird, dass die Fahrt in Geradeausrichtung zu der Ausfahrt der Parkfläche führt, kann die Entscheidung getroffen werden, dass anstelle der Geradeausfahrt in eine weitere Fahrgasse abgebogen wird. Dies eignet sich insbesondere für den Fall, wenn noch kein freier Stellplatz für das Kraftfahrzeug aufgefunden wurde. Hierbei kann der Fahrweg, welchen das Kraftfahrzeug für die Suche des freien Stellplatzes auf der Parkfläche zurücklegt, derart bestimmt werden, dass dieser maximal ist. Dadurch wird das Kraftfahrzeug an weiteren möglichen freien Stellplätzen vorbeibewegt, wodurch sich die Wahrscheinlichkeit erhöht, dass ein freier Stellplatz aufgefunden wird.

Gemäß einer weiteren Ausführungsform werden mittels einer Infrastruktureinrichtung der Parkfläche Markierungsdaten, welche die Anordnung der jeweiligen Markierungselemente innerhalb der Parkfläche und/oder eine Ausgestaltung der jeweiligen Markierungselemente beschreiben, bereitgestellt und an das Fahrerassistenzsystem übertragen, wobei das Kraftfahrzeug mittels des Fahrerassistenzsystems in Abhängigkeit von den Markierungsdaten manövriert wird. Die Markierungsdaten, die mit der Infrastruktureinrichtung der Parkfläche bereitgestellt werden, können nähere Informationen zu den Markierungselementen der Parkfläche beinhalten. Beispielsweise können die Markierungsdaten beschreiben, wie die jeweiligen Markierungselemente der Parkfläche ausgestaltet sind. Darüber hinaus können die Markierungsdaten beschreiben, ob es sich bei den Markierungselementen um Pfeile, Linien oder dergleichen handelt. Ferner können die Markierungsdaten beschreiben, an welchen Positionen die jeweiligen Markierungselemente innerhalb der Parkfläche beziehungsweise auf den Fahrgassen angeordnet sind. Beispielsweise können die Markierungsdaten beschreiben, dass sich auf einer Fahrgasse, die sich an den Einfahrtsbereich anschließt, fünf Markierungselemente angeordnet sind, welche als Pfeil ausgebildet sind. Außerdem kann den Markierungselementen eine entsprechende Kennung zugeordnet werden. Diese Informationen können dann von dem Fahrerassistenzsystem genutzt werden, um das Kraftfahrzeug zu manövrieren beziehungsweise um den Fahrweg zu bestimmen.

Weiterhin ist es vorteilhaft, wenn mittels des Fahrerassistenzsystems die in den Markierungsdaten beschriebenen Markierungselemente erkannt werden und anhand der erkannten Markierungselemente der Fahrweg entlang der erkannten Markierungselemente für die Suche des freien Stellplatzes bestimmt wird und das Kraftfahrzeug entlang des bestimmten Fahrwegs manövriert wird. Wie bereits erläutert, können die Markierungsdaten beschreiben, dass sich auf einer der Fahrgassen fünf aufeinanderfolgende Pfeile als Markierungselemente befinden. Diese Pfeile können der Reihe nach mit dem Fahrerassistenzsystem des Kraftfahrzeugs erfasst werden. Die Pfeile weisen definierte Spitzen auf und dienen somit als Bezugselement zum Manövrieren des Kraftfahrzeugs. Auf Grundlage der Pfeile, die der Reihe nach erkannt werden, kann das Kraftfahrzeug entlang der Fahrgasse manövriert werden. Auf diese Weise kann das Kraftfahrzeug zuverlässig autonom manövriert werden, ohne dass eine zuvor bestimmte Trajektorie benötigt wird.

Gemäß einer weiteren Ausgestaltung wird mittels der Infrastruktureinrichtung der freie Stellplatz auf der Parkfläche erkannt und die Infrastruktureinrichtung bestimmt die Markierungsdaten derart, dass diese eine relative Lage des freien Stellplatzes zu einem der Markierungselemente beschreiben. Wie bereits erläutert, können die Markierungsdaten die jeweiligen Markierungselemente der Parkfläche näher charakterisieren. Es kann auch vorgesehen sein, dass den jeweiligen Markierungselementen eine entsprechende Kennung zugeordnet wird. Vorliegend ist die Infrastruktureinrichtung der Parkfläche zusätzlich dazu ausgebildet, dass mit dieser der freie Stellplatz beziehungsweise ein freier Stellplatz erkannt werden kann. Dabei werden die Markierungsdaten mit Hilfe der Infrastruktureinrichtung derart bestimmt, dass diese beschreiben, wo sich der freie Stellplatz relativ zu zumindest einem der Markierungselemente befindet. Auf Grundlage dieser Markierungsdaten kann dann das Kraftfahrzeug zu dem Markierungselement manövriert werden, zu dem die relative Lage bezüglich des freien Stellplatzes beschrieben wurde. Somit kann dann das Kraftfahrzeug ausgehend von dem Markierungselement auf einfache und zuverlässige Weise zu dem freien Stellplatz manövriert werden.

Weiterhin ist es vorteilhaft, wenn der freie Stellplatz mit dem zumindest einen Sensor des Fahrerassistenzsystems anhand von den freien Stellplatz begrenzenden Objekten und/oder anhand von Parkflächenmarkierungen erkannt wird. Wie bereits erläutert, können mit dem zumindest einen Sensor Objekte beziehungsweise weitere Fahrzeuge erkannt werden, welche auf den Stellplätzen der Parkfläche abgestellt sind. Alternativ oder zusätzlich können auch Parkflächenmarkierungen erkannt werden. Diese Informationen können genutzt werden, um das Kraftfahrzeug autonom in den freien Stellplatz einzuparken. Während des Einparkens kann beispielsweise fortlaufend ein Abstand zwischen dem Kraftfahrzeug und den begrenzenden Objekten beziehungsweise den Parkflächenmarkierungen bestimmt werden. Dies ermöglicht einen zuverlässigen Einparkvorgang des Kraftfahrzeugs.

Ein erfindungsgemäßes Fahrerassistenzsystem für ein Kraftfahrzeug umfasst zumindest einen Sensor zum Erfassen von Markierungselementen der Parkfläche. Zudem ist das Fahrerassistenzsystem dazu ausgelegt, auf Grundlage der erfassten Markierungselemente, einen Fahrweg zum Manövrieren des Kraftfahrzeugs entlang von Fahrgassen der Parkfläche zu bestimmen. Des Weiteren ist das Fahrerassistenzsystem bevorzugt dazu ausgelegt, das Kraftfahrzeug entlang des bestimmten Fahrwegs autonom zu manövrieren. Wie bereits erläutert, kann das Fahrerassistenzsystem zumindest einen Sensor aufweisen, der bevorzugt als Kamera ausgebildet ist. Bevorzugt umfasst das Fahrerassistenzsystem mehrere Sensoren, mit denen ein Umgebungsbereich des Kraftfahrzeugs überwacht werden kann. Des Weiteren kann das Fahrerassistenzsystem ein elektronisches Steuergerät aufweisen, mit dem Sensordaten des Sensors ausgewertet werden können.

Ein erfindungsgemäßes Kraftfahrzeug umfasst ein erfindungsgemäßes Fahrerassistenzsystem. Das Kraftfahrzeug ist insbesondere als Personenkraftwagen ausgebildet.

Eine erfindungsgemäße Infrastruktureinrichtung für eine Parkfläche ist dazu ausgelegt, Markierungsdaten, welche eine Ausgestaltung und/oder Anordnung einer Mehrzahl von Markierungselementen auf der Parkfläche beschreiben, zu bestimmen. Die Infrastruktureinrichtung ist ferner bevorzugt dazu ausgelegt, diese Markierungsdaten an das Fahrerassistenzsystem des Kraftfahrzeugs zu übertragen. Die Infrastruktureinrichtung kann einen Speicher aufweisen, auf welchem die Anordnung und/oder Ausgestaltung der jeweiligen Markierungselemente der Parkfläche hinterlegt sind. Ferner kann die Infrastruktureinrichtung eine Sendeeinrichtung aufweisen, mittels welcher die Markierungsdaten an das Fahrerassistenzsystem des Kraftfahrzeugs übertragen werden können. Die Infrastruktureinrichtung kann ferner dazu ausgelegt sein, entsprechende Daten von Erfassungseinrichtungen der Parkfläche zu empfangen, welche beschreiben, ob die jeweiligen Stellplätze belegt sind oder frei sind. Die Infrastruktureinrichtung ist bevorzugt dazu ausgelegt, die Markierungsdaten derart bereitzustellen, dass diese zusätzliche Informationen über die freien Stellplätze beinhalten.

Ein erfindungsgemäßes Kommunikationssystem umfasst ein erfindungsgemäßes Fahrerassistenzsystem sowie eine erfindungsgemäße Infrastruktureinrichtung.

Die mit Bezug auf das erfindungsgemäße Verfahren vorgestellten bevorzugten Ausführungsformen und deren Vorteile gelten entsprechend für das erfindungsgemäße Fahrerassistenzsystem, das erfindungsgemäße Kraftfahrzeug, die erfindungsgemäße Infrastruktureinrichtung sowie das erfindungsgemäße Kommunikationssystem.

Weitere Merkmale der Erfindung ergeben sich aus den Ansprüchen, den Figuren und der Figurenbeschreibung. Die vorstehend in der Beschreibung genannten Merkmale und Merkmalskombinationen, sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Es sind somit auch Ausführungen von der Erfindung als umfasst und offenbart anzusehen, die in den Figuren nicht explizit gezeigt und erläutert sind, jedoch durch separierte Merkmalskombinationen aus den erläuterten Ausführungen hervorgehen und erzeugbar sind. Es sind auch Ausführungen und Merkmalskombinationen als offenbart anzusehen, die somit nicht alle Merkmale eines ursprünglich formulierten unabhängigen Anspruchs aufweisen. Es sind darüber hinaus Ausführungen und Merkmalskombinationen, insbesondere durch die oben dargelegten Ausführungen, als offenbart anzusehen, die über die in den Rückbezügen der Ansprüche dargelegten Merkmalskombinationen hinausgehen oder abweichen.

Die Erfindung wird nun anhand von bevorzugten Ausführungsbeispielen sowie unter Bezugnahme auf die beigefügten Zeichnungen näher erläutert.

Dabei zeigen:
- Fig. 1: ein Kraftfahrzeug gemäß einer Ausführungsform der vorliegenden Erfindung, welches ein Fahrerassistenzsystem aufweist;
- Fig. 2: das Kraftfahrzeug, welches autonom auf einer Parkfläche zum Auffinden eines freien Stellplatzes manövriert wird; und
- Fig. 3: das Kraftfahrzeug, welches auf der Parkfläche autonom manövriert wird gemäß einer weiteren Ausführungsform.

In den Figuren werden gleiche und funktionsgleiche Elemente mit den gleichen Bezugszeichen versehen.

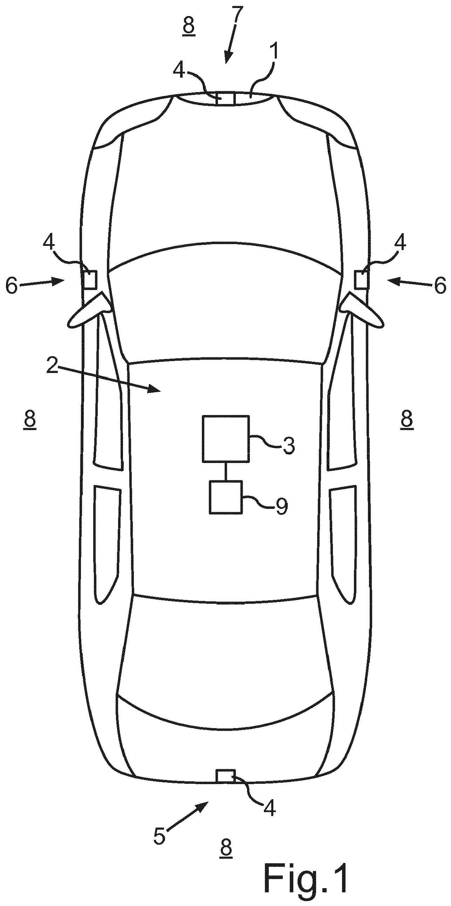

Fig. 1 zeigt ein Kraftfahrzeug 1 gemäß einer Ausführungsform der vorliegenden Erfindung in einer Draufsicht. Das Kraftfahrzeug 1 ist vorliegend als Personenkraftwagen ausgebildet. Das Kraftfahrzeug 1 umfasst ein Fahrerassistenzsystem 2. Das Fahrerassistenzsystem 2 umfasst ferner ein elektronisches Steuergerät 3. Darüber hinaus umfasst das Fahrerassistenzsystem 2 zumindest einen Sensor 4. In dem vorliegenden Ausführungsbeispiel umfasst das Fahrerassistenzsystem 2 vier Sensoren 4. Vorliegend sind die Sensoren 4 verteilt an dem Kraftfahrzeug 1 angeordnet. Dabei ist ein Sensor 4 in einem Heckbereich 5 angeordnet, ein Sensor 4 ist in einem Frontbereich 7 angeordnet und die übrigen Sensoren 4 sind in einem jeweiligen Seitenbereich 6, insbesondere in einem Bereich der Seitenspiegel, angeordnet. Die Anzahl und Anordnung der Sensoren 4 des Fahrerassistenzsystems 2 ist vorliegend rein beispielhaft zu verstehen.

Mit Hilfe der Sensoren 4 kann ein Umgebungsbereich 8 des Kraftfahrzeugs 1 erfasst werden. Die Sensoren 4 können bevorzugt als Kamera ausgebildet sein. Mit den jeweiligen Kameras kann eine Bildsequenz oder Videodaten bereitgestellt werden, welche den Umgebungsbereich 8 beschreiben. Diese Videodaten können von dem Steuergerät 3 ausgewertet werden. Hierzu ist das Steuergerät 3 über entsprechende, hier nicht dargestellte, Datenleitungen mit den Sensoren 4 verbunden. Beispielsweise kann das Steuergerät 3 einen entsprechenden Bildverarbeitungsalgorithmus oder Objekterkennungsalgorithmus nutzen, um Objekte in dem Umgebungsbereich 8 zu erkennen. Dabei ist es insbesondere vorgesehen, dass Markierungselemente 13 beziehungsweise Fahrbahnmarkierungen mit den Sensoren 4 erkannt werden können. Des Weiteren umfasst das Fahrerassistenzsystem 2 eine Empfangseinrichtung 9, mittels welcher Daten drahtlos empfangen werden können.

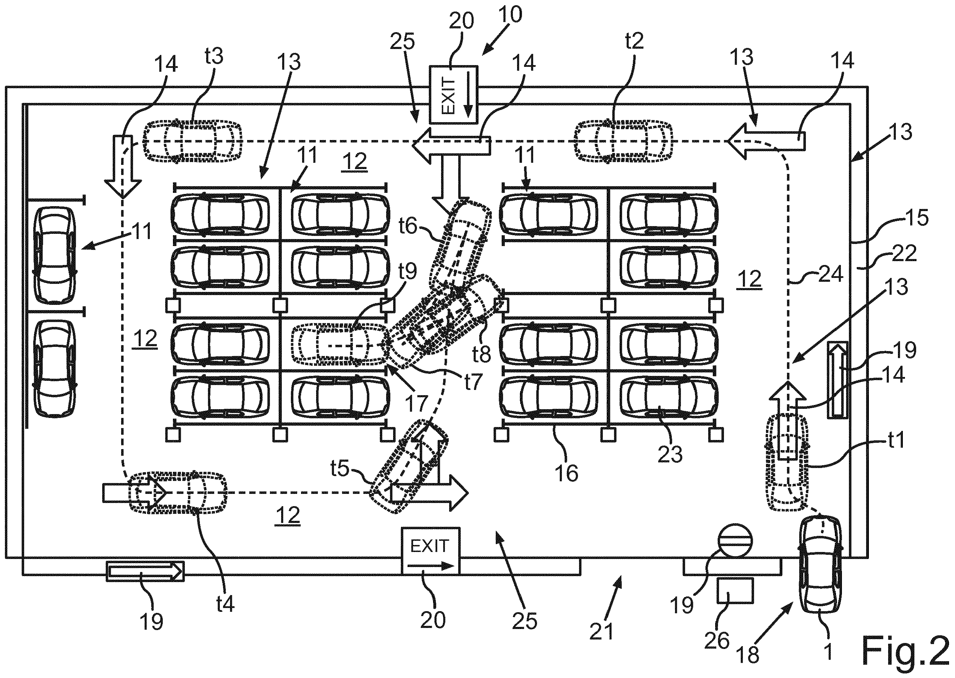

Fig. 2 zeigt das Kraftfahrzeug 1, welches auf einer Parkfläche 10 autonom manövriert wird. Die Parkfläche 10 umfasst eine Mehrzahl von Stellplätzen 11, auf denen Fahrzeuge abgestellt werden können. Darüber hinaus umfasst die Parkfläche 10 eine Mehrzahl von Fahrgassen 12, auf denen das Kraftfahrzeug 1 manövriert werden kann, um zu den Stellplätzen 11 zu gelangen. Die Stellplätze 11 sind durch Parkflächenmarkierungen 16 gekennzeichnet. Auf den Fahrgassen 12 befinden sich unterschiedliche Markierungselemente 13. Diese Markierungselemente 13 sind vorliegend als Pfeile 14 und Linien 15 ausgestaltet. Diese Markierungselemente 13 können mit Hilfe der Sensoren 4 beziehungsweise mit Hilfe des Fahrerassistenzsystems 2 erkannt werden. Des Weiteren umfasst die Parkfläche 10 Verkehrsschilder 19, welche eine vorgegebene Fahrtrichtung auf den Fahrgassen 12 beschreiben. Außerdem weist die Parkfläche 10 Hinweisschilder 20 auf, welche den Fahrweg zu einer Ausfahrt 21 beziehungsweise zu einem Ausfahrtsbereich der Parkfläche 10 beschreiben. Auch diese Verkehrsschilder 19 und die Hinweisschilder 20 können mit Hilfe des Fahrerassistenzsystems 2 des Kraftfahrzeugs 1 erkannt werden.

Vorliegend soll das Kraftfahrzeug 1 autonom innerhalb der Parkfläche 10 manövriert werden und einen freien Stellplatz 17 auffinden. Anschließend soll das Kraftfahrzeug 1 autonom in diesen freien Stellplatz 17 eingeparkt werden. Das Kraftfahrzeug 1 wird zunächst an einem Einfahrtsbereich 18 der Parkfläche 10 positioniert. Beispielsweise kann das Kraftfahrzeug 1 von einem Fahrer des Kraftfahrzeugs 1 in diesem Einfahrtsbereich 18 abgestellt werden.

Vorliegend ist die Position des Kraftfahrzeugs 1 während des autonomen Manövrierest für unterschiedliche Zeitpunkte t1 bis t9 dargestellt. Zu einem Zeitpunkt t1 befindet sich das Kraftfahrzeug 1 auf einer der Fahrgassen 12. Dabei wird mit Hilfe des Fahrerassistenzsystems 2 ein Markierungselement 13 in Form eines Pfeils 14 erkannt. Zudem kann das Markierungselement 13 in Form der Linie 15 erkannt werden. Zum Erkennen der jeweiligen Markierungselemente 13 können die erkannten Markierungselemente 13 mit Referenzmarkierungselementen verglichen werden, die beispielsweise auf einem Speicher des Fahrerassistenzsystems 2 beziehungsweise des Steuergeräts 3 hinterlegt sind. Auf dem Speicher können für jedes der Referenzmarkierungselemente zusätzliche Informationen hinterlegt sein, welche eine typische Anordnung des Markierungselements 13 auf den Fahrgassen 12 beschreibt. Diese Informationen können beispielsweise beschreiben, dass ein Pfeil 14 üblicherweise mittig in der Fahrgasse 12 angeordnet ist und/oder dass eine Linie 15 üblicherweise eine Fahrgasse 12 begrenzt. Auf Grundlage dieser Informationen und der erkannten Markierungselemente 13 kann dann mit dem Fahrerassistenzsystem 2 ein befahrbarer Bereich bestimmt werden, auf dem das Kraftfahrzeug 1 bewegt werden kann. Auf Grundlage der erkannten Verkehrsschilder 19 kann zudem eine Fahrtrichtung bestimmt werden, entlang welcher das Kraftfahrzeug 1 manövriert werden kann. Des Weiteren können mit den Sensoren 4 des Fahrerassistenzsystems 2 weitere Objekte der Parkfläche 10 erkannt werden. Bei den Objekten kann es sich beispielsweise um Wände 22 und/oder um geparkte Fahrzeuge 23 handeln. Auf Grundlage dieser Informationen kann dann ein Fahrweg 24 bestimmt werden, entlang welchem das Kraftfahrzeug 1 autonom manövriert wird.

Zu einem Zeitpunkt t2 befindet sich das Kraftfahrzeug 1 auf einer weiteren Fahrgasse 12. Zwischen dem Zeitpunkt t1 und dem Zeitpunkt t2 hat das Fahrerassistenzsystem 2 aufgrund der Markierungselemente 13 und der Objekte 22, 23 das Kraftfahrzeug 1 nach links auf die weitere Fahrgasse 12 manövriert. Zu dem Zeitpunkt t2 kann mit Hilfe des Fahrerassistenzsystems 2 der Pfeil 14 erkannt werden, welcher auf eine Abzweigung 25 der Fahrgassen 12 hindeutet. Dies bedeutet, dass das Kraftfahrzeug 1 dort entweder weiter geradeaus oder nach links in die weitere Fahrgasse 12 manövriert werden kann. Vorliegend wird mit dem Fahrerassistenzsystem 2 zusätzlich das Hinweisschild 20 erkannt, welches darauf hindeutet, dass die Ausfahrt 21 der Parkfläche 10 entlang der Fahrgasse 12, die sich links befindet, erreicht werden kann. Da noch kein freier Stellplatz 17 für das Kraftfahrzeug 1 aufgefunden wurde, wird der Fahrweg 24 derart bestimmt, dass dieser maximal ist. Damit kann die Wahrscheinlichkeit erhöht werden, einen freien Stellplatz 17 aufzufinden. Daher wird das Kraftfahrzeug 1 weiter geradeaus manövriert.

Zu einem Zeitpunkt t3 wurde das Kraftfahrzeug 1 weiter entlang der Fahrgasse 12 bewegt. Auch hier kann es die Objekte 22, 23 und die Pfeile 14 erkennen und somit entscheiden, dass das Kraftfahrzeug 1 nach links in die weitere Fahrgasse 12 manövriert wird. Zu einem Zeitpunkt t4 hat das Kraftfahrzeug 1 eine weitere Kurvenfahrt nach links durchgeführt. Auch hier wurde auf Grundlage der Pfeile 14, Verkehrsschilder 19 und/oder der Objekte 22, 23 der Fahrweg 24 bestimmt.

Zu einem Zeitpunkt t5 befindet sich das Kraftfahrzeug 1 an einer weiteren Abzweigung 25. Auch in diesem Fall wird das Hinweisschild 20 herangezogen und entschieden, dass das Kraftfahrzeug 1 für die weitere Suche des freien Stellplatzes 17 nicht in Richtung der Ausfahrt 21 bewegt wird. Daher wird das Kraftfahrzeug 1 nach links in die weitere Fahrgasse 12 manövriert. In dieser Fahrgasse 12 wurde mit Hilfe der Sensoren 4 der freie Stellplatz 17 erkannt. Daraufhin wird ein autonomes Einparkmanöver zum Einparken des Kraftfahrzeugs 1 in die freie Stellfläche 17 durchgeführt. Zum Durchführen des autonomen Einparkmanövers werden mit den Sensoren 4 die geparkten Fahrzeuge 23, welche den freien Stellplatz 17 beziehungsweise die Parklücke begrenzen, und die Parkflächenmarkierungen 16 erkannt. Dabei wird während der Zeitpunkte t6, t7 und t8 ein mehrzügiges Parkmanöver durchgeführt, bei welchem das Kraftfahrzeug 1 zunächst in Vorwärtsfahrtrichtung und anschließend in Rückwärtsfahrtrichtung, dann in Vorwärtsfahrtrichtung und anschließend wieder in Rückwärtsfahrtrichtung bewegt wird. Schließlich wird dann das Kraftfahrzeug 1 zu einem Zeitpunkt t9 in dem freien Stellplatz 17 abgestellt.

Wie das Beispiel von Fig. 2 zeigt, wurde mit Hilfe des Fahrerassistenzsystems 2 der Fahrweg nur auf Grundlage der erkannten Markierungselemente 13, der Verkehrsschilder 19, der Hinweisschilder 20 sowie der Objekte 22 und 23 bestimmt. Dabei war es nicht erforderlich, dass eine Trajektorie, welche von dem Einfahrtsbereich 18 zu dem freien Stellplatz 17 führt, im Vorfeld bestimmt wird. In diesem Fall liegt die "Intelligenz" hauptsächlich bei dem Fahrerassistenzsystem 2.

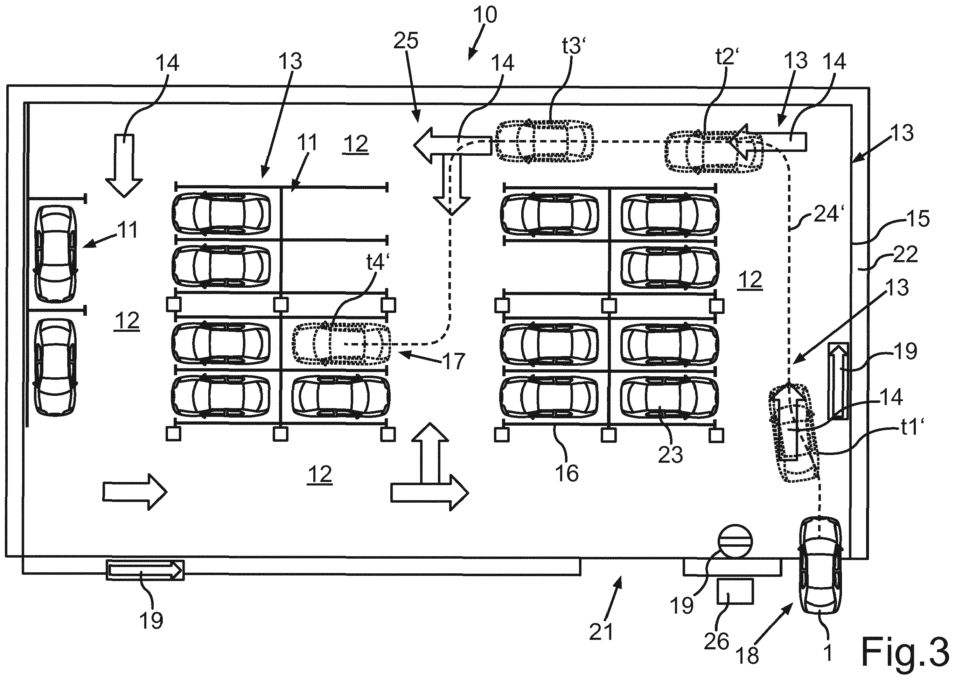

Fig. 3 zeigt das Kraftfahrzeug 1, welches autonom auf der Parkfläche 10 manövriert wird gemäß einer weiteren Ausführungsform. Vorliegend weist die Parkfläche 10 eine Infrastruktureinrichtung 26 auf. Mit dieser Infrastruktureinrichtung 26 können Markierungsdaten bereitgestellt werden, welche die jeweiligen Markierungselemente 13 der Parkfläche 10 beschreiben. Des Weiteren kann es vorgesehen sein, dass mit der Infrastruktureinrichtung 26 Informationen zu dem freien Stellplatz 17 vorliegen. Hierzu kann die Infrastruktureinrichtung 26 beispielsweise entsprechende Daten von Erfassungseinrichtungen der Parkfläche 10 empfangen, welche beschreiben, ob ein Stellplatz 11 frei oder belegt ist. Diese Informationen über den freien Stellplatz 17 können zusätzlich in Form der Markierungsdaten von der Infrastruktureinrichtung 26 an das Fahrerassistenzsystem 2 übertragen werden. Die Infrastruktureinrichtung 26 und das Fahrerassistenzsystem 2 des Kraftfahrzeugs 1 bilden zusammen ein Kommunikationssystem 27.

Die Markierungsdaten können beschreiben, wie die jeweiligen Markierungselemente 13 ausgebildet sind und wo diese auf den Fahrgassen 12 angeordnet sind. Dabei beschreiben die Markierungsdaten zudem, wo sich der freie Stellplatz 17 relativ zu einem der Markierungselemente 13 befindet. Auf Grundlage dieser Markierungsdaten kann nun mit dem Fahrerassistenzsystem 2 der Fahrweg 24' bestimmt werden. Zu einem Zeitpunkt t1' wird das Kraftfahrzeug 1 so manövriert, dass dies zu dem Pfeil 14 ausgerichtet wird. Zu einem Zeitpunkt t2' wird das Kraftfahrzeug 1 derart manövriert, dass dieses relativ zu einem weiteren Pfeil 14 ausgerichtet wird. Anschließend wird zu einem Zeitpunkt t3' der Pfeil 14 erkannt, welcher auf die Abzweigung 25 hinweist. Ausgehend von diesem Pfeil 14 liegen dem Fahrerassistenzsystem 2 Informationen vor, wo der freie Stellplatz 17 relativ zu diesem Pfeil 14 liegt. Diese Informationen werden nun genutzt, um das Kraftfahrzeug 1 zu dem freien Stellplatz 17 manövrieren. Zu einem Zeitpunkt t4' wird das Kraftfahrzeug 1 auf dem freien Stellplatz 17 abgestellt.

In dem Beispiel von Fig. 3 werden zudem die Markierungsdaten, die von der Infrastruktureinrichtung 26 bereitgestellt werden, zum Manövrieren des Kraftfahrzeugs 1 genutzt. In diesem Fall liegt die "Intelligenz" sowohl bei dem Fahrerassistenzsystem 2 als auch bei der Infrastruktureinrichtung 26 der Parkfläche 10. Hierdurch kann beispielsweise der freie Stellplatz 17 im Vergleich zu dem Verfahren, dass in Zusammenhang mit Fig. 2 beschrieben wurde, schneller aufgefunden werden. In diesem Fall wird aber eine entsprechende Infrastruktureinrichtung 26 benötigt.

## Patentansprüche

1. Verfahren zum autonomen Manövrieren eines Kraftfahrzeugs (1) auf einer Parkfläche (10), welche eine Mehrzahl von Stellplätzen (11) umfasst, bei welchem das Kraftfahrzeug (1) von einem Einfahrtsbereich (18) der Parkfläche (10) entlang von Fahrgassen (12), welche zu den Stellplätzen (11) führen, zum Auffinden eines freien Stellplatzes (17) der Stellplätze (11) manövriert wird, wobei während des Manövrierens Markierungselemente (13) der Parkfläche (10) mit zumindest einem Sensors (4) eines Fahrerassistenzsystems (2) des Kraftfahrzeugs (1) erfasst werden und das Kraftfahrzeug (1) anhand der erfassten Markierungselemente (13) manövriert wird,
**dadurch gekennzeichnet, dass**
mittels des Fahrerassistenzsystems (2) anhand der erfassen Markierungselemente (13) ein Fahrweg (24, 24') zum Manövrieren des Kraftfahrzeugs (1) entlang der Fahrgassen (12) bestimmt wird und das Kraftfahrzeug (1) entlang des bestimmten Fahrwegs (24, 24') autonom manövriert wird.

2. Verfahren nach Anspruch 1,
**dadurch gekennzeichnet, dass**
als die Markierungselemente (13) Fahrbahnmarkierungen in Form von Pfeilen (14) erfasst werden, welche auf den Fahrgassen (12) aufgebracht sind.

3. Verfahren nach Anspruch 1 oder 2,
**dadurch gekennzeichnet, dass**
die Markierungselemente (13) mittels des Fahrerassistenzsystems (2) anhand eines Vergleichs der jeweiligen Markierungselemente (13) mit Referenzmarkierungselementen erkannt werden.

4. Verfahren nach Anspruch 3,
**dadurch gekennzeichnet, dass**
mittels des Fahrerassistenzsystems (2) fortlaufend eine relative Lage zwischen dem Kraftfahrzeug (1) und den jeweiligen erkannten Markierungselementen (13) bestimmt wird und zu jedem der erkannten Markierungselemente (13) ein mit dem Kraftfahrzeug (1) befahrbarer Bereich und/oder eine erlaubte Fahrtrichtung auf der Fahrgasse (12), welche den erkannten Markierungselement (13) zugeordnet ist, bestimmt wird.

5. Verfahren nach einem der vorhergehenden Ansprüche,
**dadurch gekennzeichnet, dass**
ein Verkehrsschild (19) und/oder ein Hinweisschild (20) der Parkfläche (10) mit dem zumindest einen Sensor (4) erkannt wird, wobei das Verkehrsschild (19) und/oder das Hinweisschild (20) eine räumliche Ausgestaltung der Parkfläche (10) beschreibt, und der Fahrweg (24, 24') zusätzlich anhand des Verkehrsschilds (19) und/oder des Hinweisschilds (20) bestimmt wird.

6. Verfahren nach Anspruch 5,
**dadurch gekennzeichnet, dass**
bei einer Abzweigung (25) der Fahrgassen (12) der Fahrweg (24, 24') des Kraftfahrzeugs (1) anhand des Verkehrsschilds (19) und/oder des Hinweisschilds (20) bestimmt wird, wobei das Verkehrsschild (19) und/oder Hinweisschild (20) eine Ausfahrt (20) von der Parkfläche (10) und/oder eine vorgegebene Fahrtrichtung auf den Fahrgassen (12) beschreibt.

7. Verfahren nach einem der vorhergehenden Ansprüche,
**dadurch gekennzeichnet, dass**
der Fahrweg (24, 24'), welchen das Kraftfahrzeug (1) für die Suche des freien Stellplatzes (17) auf der Parkfläche (10) zurücklegt, derart bestimmt wird, dass dieser maximal ist.

8. Verfahren nach einem der vorhergehenden Ansprüche
**dadurch gekennzeichnet, dass**
mittels einer Infrastruktureinrichtung (26) der Parkfläche (10) Markierungsdaten, welche die Anordnung der jeweiligen Markierungselemente (13) innerhalb der Parkfläche (10) und/oder eine Ausgestaltung der jeweiligen Markierungselemente (13) beschreiben, bereitgestellt und an das Fahrerassistenzsystem (2) übertragen werden, wobei das Kraftfahrzeug (1) mittels des Fahrerassistenzsystems (2) in Abhängigkeit von dem Markierungsdaten manövriert wird.

9. Verfahren nach Anspruch 8,
**dadurch gekennzeichnet, dass**
mittels des Fahrerassistenzsystems (2) die in den Markierungsdaten beschriebenen Markierungselemente (13) erkannt werden und anhand der erkannte Markierungselemente (13) der Fahrweg (24, 24') entlang der erkannte Markierungselemente (13) für die Suche des freien Stellplatzes (17) bestimmt wird und das Kraftfahrzeug (1) entlang des bestimmten Fahrwegs (24, 24') manövriert wird.

10. Verfahren nach Anspruch 8 oder 9,
**dadurch gekennzeichnet, dass**
mittels der Infrastruktureinrichtung (26) der freie Stellplatz (17) auf der Parkfläche (10) erkannt wird und die Markierungsdaten mittels der Infrastruktureinrichtung (26) derart bestimmt, dass diese eine relative Lage des freien Stellplatzes (17) zu einem der Markierungselemente (13) beschreiben.

11. Verfahren nach einem der vorhergehenden Ansprüche,
**dadurch gekennzeichnet, dass**
der freie Stellplatz (17) mit dem zumindest einen Sensor (4) des Fahrerassistenzsystems (2) anhand von den freien Stellplatz (17) begrenzenden Objekten (23) und/oder anhand von Parkflächenmarkierungen (16) erkannt wird.

12. Fahrerassistenzsystem (2) für ein Kraftfahrzeug (1), mit zumindest einem Sensor (4) zum Erfassen von Markierungselementen (13) einer Parkfläche (10), wobei das Fahrerassistenzsystem (2) dazu ausgelegt ist, das Kraftfahrzeug (2) auf Grundlage der erfassen Markierungselemente (13) einen Fahrweg (24, 24') zum Manövrieren des Kraftfahrzeugs (1) entlang von Fahrgasen (12) der Parkfläche (10) zu bestimmen.

13. Kraftfahrzeug (1) mit einem Fahrerassistenzsystem (2) nach Anspruch 12.

14. Infrastruktureinrichtung (26) für eine Parkfläche (10), wobei die Infrastruktureinrichtung (26) dazu ausgelegt ist, Markierungsdaten, welche eine Ausgestaltung und/oder Anordnung einer Mehrzahl von Markierungselementen (13) der Parkfläche (10) beschreibt, zu bestimmen.

15. Kommunikationssystem (27) mit einem Fahrerassistenzsystem (2) nach Anspruch 12 und mit einer Infrastruktureinrichtung (26) nach Anspruch 14.
